# EUROPEAN PATENT APPLICATION

(11) **EP 4 637 072 A1**
(43) Date of publication of application: **22.10.2025**
(21) Application number: 22968287.7
(22) Date of filing: 16.12.2022
(51) Int. Cl.: H04L 5/14

(54) **CAPABILITY INDICATION METHOD AND APPARATUS, CAPABILITY DETERMINATION METHOD AND APPARATUS, AND COMMUNICATION APPARATUS AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2022/139788
(87) International publication number: WO 2024/124583

(57) **Abstract**

The present disclosure relates to the technical field of communications, in particular to a capability indication method and apparatus, a capability determination method and apparatus, and a communication apparatus and a storage medium. The capability indication method comprises: initiating random access to a network device, wherein a resource used for the random access is used for indicating whether a terminal has a full-duplex capability. According to the embodiments of the present disclosure, by means of a resource used for random access, a terminal can indicate to a network device whether the terminal has a full-duplex capability, such that the network device can determine whether the terminal has a full-duplex capability, and thus the network device can perform appropriate configuration and scheduling for the terminal according to the capability of the terminal, thereby facilitating ensuring that a terminal having a full-duplex capability can be scheduled by the network device in a timely manner to perform full-duplex communication, so as to improve the communication efficiency, and avoid the problem occurring when a terminal having no full-duplex capability is scheduled by the network device to perform full-duplex communication.

## Description

### TECHNICAL FIELD

The present disclosure relates to the field of communication technologies, and in particular to a capability indication method, a capability determination method, a capability indication apparatus, a capability determination apparatus, a capability indication system, a communication apparatus, and a computer-readable storage medium.

### BACKGROUND

In order to realize full-duplex communication of the terminal, a network device may configure a subband for the terminal on time domain resources. For example, an uplink subband is configured for the terminal in a downlink slot, then in the downlink slot, uplink data sent by the terminal may be received in the uplink subband, and/or downlink data may be sent to the terminal on a frequency domain resource other than the uplink subband, thereby realizing the full-duplex communication of the terminal in the downlink slot. However, not all terminals support the full-duplex communication, which will cause some problems in the above procedure.

### SUMMARY

Embodiments of the present disclosure propose a capability indication method, a capability determination method, a capability indication apparatus, a capability determination apparatus, a capability indication system, a communication apparatus, and a computer-readable storage medium to solve the technical problems in the related art.

According to a first aspect of embodiments of the present disclosure, a capability indication method is proposed. The method is performed by a terminal, and the method includes: initiating random access to a network device, in which a resource used for the random access is used to indicate whether the terminal has the full-duplex capability.

According to a second aspect of embodiments of the present disclosure, a capability determination method is proposed. The method is performed by a network device, and the method includes: performing random access with a terminal; and determining whether the terminal has the full-duplex capability based on a resource used by the terminal for random access.

According to a third aspect of embodiments of the present disclosure, a capability indication apparatus is proposed. The apparatus includes: a sending module, configured to initiate random access to a network device, in which a resource used for the random access is used to indicate whether the terminal has the full-duplex capability.

According to a fourth aspect of embodiments of the present disclosure, a capability determination apparatus is proposed. The apparatus includes: a communication module, configured to perform random access with a terminal; and a processing module, configured to determine whether the terminal has the full-duplex capability based on a resource used by the terminal for random access.

According to a fifth aspect of embodiments of the present disclosure, a capability indication system is proposed. The system includes a terminal and a network device. The terminal is configured to implement the capability indication method described in any of the above embodiments, and the network device is configured to implement the above capability determination method.

According to a sixth aspect of embodiments of the present disclosure, a communication apparatus is proposed. The apparatus includes: a processor; and a memory for storing a computer program. When the computer program is executed by the processor, the above capability indication method is implemented.

According to a seventh aspect of embodiments of the present disclosure, a communication apparatus is proposed. The apparatus includes: a processor; and a memory for storing a computer program. When the computer program is executed by the processor, the above capability determination method is implemented.

According to an eighth aspect of embodiments of the present disclosure, a computer-readable storage medium for storing a computer program is proposed. When the computer program is executed by a processor, the above capability indication method is implemented.

According to a ninth aspect of embodiments of the present disclosure, a computer-readable storage medium for storing a computer program is proposed. When the computer program is executed by a processor, the above capability determination method is implemented.

According to the embodiments of the present disclosure, the terminal can indicate to the network device whether the terminal has the full-duplex capability by the resource used for the random access, so that the network device can determine whether the terminal has the full-duplex capability, so that the network device can make appropriate configuration and scheduling for the terminal according to the capability of the terminal. This is beneficial for ensuring that the terminal with full-duplex capability can be scheduled by the network device in time for full-duplex communication, thereby improving communication efficiency and avoiding problems caused by the terminal without full-duplex capability being scheduled by the network device for full-duplex communication.

### BRIEF DESCRIPTION OF THE DRAWINGS

In order to more clearly illustrate the technical solutions in the embodiments of the present disclosure, the drawings required for use in the description of the embodiments will be briefly introduced below. Obviously, the drawings described below are only some embodiments of the present disclosure. For ordinary technicians in this field, other drawings can be obtained based on these drawings without creative work.
FIG. 1 is a schematic flow chart of a capability indication method according to an embodiment of the present disclosure.
FIG. 2 is a schematic flow chart of another capability indication method according to an embodiment of the present disclosure.
FIG. 3 is a schematic flow chart of yet another capability indication method according to an embodiment of the present disclosure.
FIG. 4A is a schematic diagram showing random access occasions according to an embodiment of the present disclosure.
FIG. 4B is a schematic diagram showing other random access occasions according to an embodiment of the present disclosure.
FIG. 5 is a schematic flow chart of a capability determination method according to an embodiment of the present disclosure.
FIG. 6 is a schematic diagram of interaction between a terminal and a network device according to an embodiment of the present disclosure.
FIG. 7 is a schematic block diagram of a capability indication apparatus according to an embodiment of the present disclosure.
FIG. 8 is a schematic block diagram of a capability determination apparatus according to an embodiment of the present disclosure.
FIG. 9 is a schematic block diagram of an apparatus for capability determination according to an embodiment of the present disclosure.
FIG. 10 is a schematic block diagram of an apparatus for capability indication according to an embodiment of the present disclosure.

### DETAILED DESCRIPTION

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without making creative work are within the scope of protection of the present disclosure.

The terms used in the embodiments of the present disclosure are only for the purpose of describing specific embodiments and are not intended to limit the embodiments of the present disclosure. The singular forms of "a", "an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc., may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "in a case that" or "when" or "in response to determining that".

For the purpose of brevity and ease of understanding, the terms used herein to characterize size relationships are "greater than", "less than", "higher than" or "lower than". However, those skilled in the art can understand that the term "greater than" also covers the meaning of "greater than or equal to", "less than" also covers the meaning of "less than or equal to", the term "higher than" covers the meaning of "higher than or equal to", and "lower than" also covers the meaning of "lower than or equal to".

In an embodiment, a network device may configure a downlink subband for a terminal in an uplink time domain resource. If the network device can perform full-duplex communication and the terminal can perform half-duplex communication, then in the uplink time domain unit, the terminal may perform downlink communication in the downlink subband, or may perform uplink communication in a frequency domain resource other than the downlink subband; if both the network device and the terminal can perform the full-duplex communication, then in the uplink time domain unit, the terminal may perform the downlink communication in the downlink subband, and may perform the uplink communication in the frequency domain resource other than the downlink subband.

In an embodiment, the network device may configure an uplink subband for the terminal in a downlink time domain resource. If the network device can perform the full-duplex communication and the terminal can perform the half-duplex communication, then in the downlink time domain unit, the terminal may perform uplink communication in the uplink subband, or may perform downlink communication on a frequency domain resource other than the uplink subband; if both the network device and the terminal can perform the full-duplex communication, then in the downlink time domain unit, the terminal may perform the uplink communication in the uplink subband, and may perform the downlink communication on the frequency domain resource other than the uplink subband.

However, not all terminals have full-duplex capability. If the subband is configured for a terminal without full-duplex capability according to the above embodiments, it may cause confusion in the terminal's communication operation within the time domain resource configured with the subband. In addition, since the terminal cannot use the subband communication well, it may also lead to a waste of the frequency domain resource.

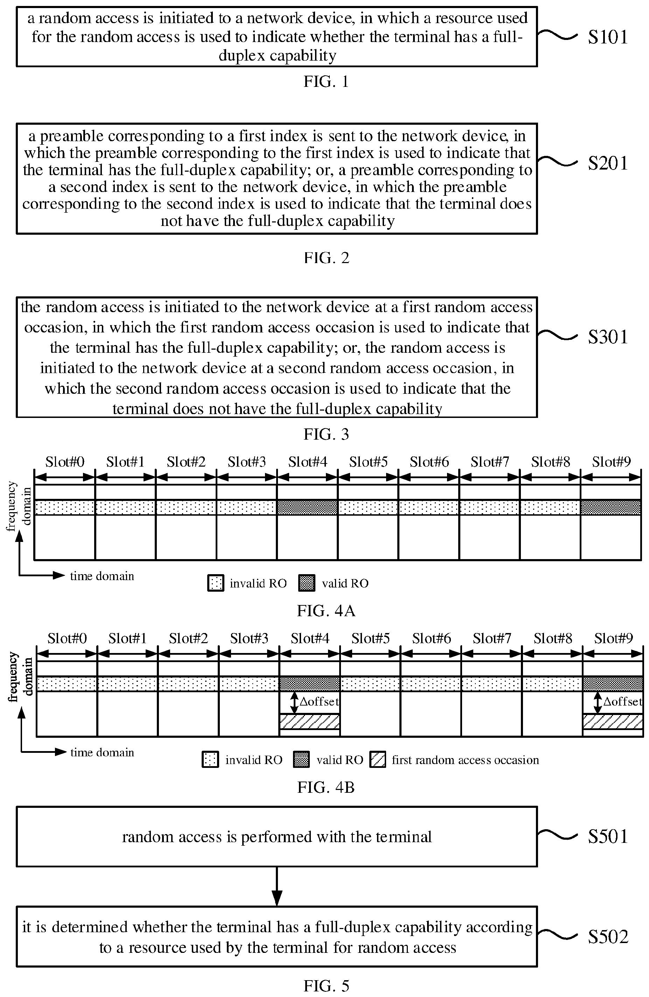

FIG. 1 is a schematic flow chart of a capability indication method according to an embodiment of the present disclosure. The capability indication method shown in this embodiment may be performed by a terminal, and the terminal includes but is not limited to a communication apparatus such as a mobile phone, a tablet computer, a wearable device, a sensor, an Internet of Things device, etc. The terminal may communicate with a network device. The network device includes but is not limited to a network device in a communication system of 4G, 5G, 6G, and so on, such as a base station, a core network, etc.

As shown in FIG. 1, the capability indication method may include following steps.

In step S101, a random access is initiated to a network device, in which a resource used for the random access is used to indicate whether the terminal has a full-duplex capability.

In an embodiment, when the terminal needs to establish a communication connection with the network device, it may initiate the random access to the network device. The random access may be a four-step random access or a two-step random access, which may be selected according to requirements and is not limited by the present disclosure.

During the random access, the terminal may implicitly indicate to the network device that the terminal has the full-duplex capability or does not have the full-duplex capability through the resource used for random access, in which the full-duplex may also be referred to as subband full duplex (SBFD).

Correspondingly, during the random access with the terminal, the network device may determine the terminal has the full-duplex capability or does not have the full-duplex capability based on the resource used by the terminal for the random access, so that the terminal may be properly configured and/or scheduled based on the capability of the terminal.

In an embodiment, when the network device determines that the terminal does not have the full-duplex capability, the network device may not configure a subband for the terminal.

For example, no downlink subband is configured for the terminal in an uplink time domain resource; for example, no uplink subband is configured for the terminal in a downlink time domain resource. In this way, the problems caused by the terminal without full-duplex capability attempting the full-duplex communication in the time domain resource can be avoided, and the waste of frequency domain resource caused by configuring the subband for the terminal can be avoided.

In an embodiment, the time domain resource includes at least one of: a slot, a symbol. For example, the symbol may be an orthogonal frequency division multiplexing (OFDM) symbol.

In an embodiment, when the network device determines that the terminal does not have the full-duplex capability, the network device does not schedule the terminal to communicate on the subband, even if the subband is configured for the terminal.

In an embodiment, the network device may configure a subband for the terminal when determining that the terminal has the full-duplex capability. In an embodiment, the network device may also schedule the terminal to communicate on the subband when configuring the subband for the terminal.

For example, if a downlink subband is configured for the terminal in an uplink time domain resource, the terminal may be scheduled to perform downlink communication in the downlink subband of the uplink time domain resource, and the terminal may also be scheduled to perform uplink communication in a frequency domain resource other than the downlink subband corresponding to the uplink time domain resource, thereby realizing the full-duplex communication of the terminal in the uplink time domain resource.

For example, if an uplink subband is configured for the terminal in a downlink time domain resource, the terminal may be scheduled to perform uplink communication in the uplink subband of the downlink time domain resource, and the terminal may also be scheduled to perform downlink communication in a frequency domain resource other than the uplink subband corresponding to the downlink time domain resource, thereby realizing the full-duplex communication of the terminal in the downlink time domain resource.

For example, if an uplink subband is configured for the terminal in a flexible time domain resource, the terminal may be scheduled to perform uplink communication in the uplink subband of the flexible time domain resource, and the terminal may also be scheduled to perform downlink communication in a frequency domain resource other than the uplink subband corresponding to the flexible time domain resource, thereby realizing the full-duplex communication of the terminal in the flexible time domain resources.

In an embodiment, the network device may first configure subbands for multiple terminals (e.g., all terminals in the same cell). Then, it is determined whether each terminal has the full-duplex capability according to the random access procedure of each terminal. For a terminal with full-duplex capability, the terminal with full-duplex capability is scheduled to communicate on the subband, while the terminal without full-duplex capability is not scheduled to communicate on the subband.

For example, uplink subbands are configured for terminal #1, terminal #2, and terminal #3 in the downlink time domain resource. During the random access procedure, terminal #1, terminal #2, and terminal #3 respectively indicate whether they have the full-duplex capability through the resources used for random access. For example, terminal #3 has the full-duplex capability, while terminal #1 and terminal #2 do not have the full-duplex capability.

The network device may schedule terminal #3 to perform the uplink communication in the uplink subband of the downlink time domain resource, and/or schedule terminal #3 to perform downlink communication in the frequency domain resource other than the uplink subband corresponding to the downlink time domain resource, thereby realizing the full-duplex communication of terminal #3 in the downlink time domain resource. The base station does not schedule terminal #1 or terminal #2 to perform the uplink communication in the uplink subband of the downlink time domain resource, so as to avoid problems caused by terminal #1 and terminal #2 attempting to perform the full-duplex communication without full-duplex capability.

It can be seen that according to the embodiments of the present disclosure, the terminal can indicate to the network device whether the terminal has the full-duplex capability through the resource used for random access, so that the network device can determine whether the terminal has the full-duplex capability, so that the network device can make appropriate configuration and scheduling for the terminal according to the capability of the terminal. This is beneficial for ensuring that the terminal with full-duplex capability can be scheduled by the network device in time for the full-duplex communication, thereby improving the communication efficiency and avoiding problems caused by the terminal without full-duplex capability being scheduled by the network device for the full-duplex communication.

It should be noted that in the embodiments of the present disclosure, whether the terminal has the full-duplex capability may be determined according to a capability of the terminal. For example, if the terminal may support communication in a first transmission direction in the subband, and/or communication in a second transmission direction in the frequency domain resource other than the subband of the same time domain resource, then it may be determined that the terminal has the full-duplex capability. The first transmission direction and the second transmission direction are different transmission directions. For example, when the first transmission direction is uplink, the second transmission direction is downlink, or when the first transmission direction is downlink, the second transmission direction is uplink.

Alternatively, in the embodiments of the present disclosure, whether the terminal has the full-duplex capability may be set by the terminal as needed. For example, although the terminal has the full-duplex capability, for certain considerations, such as when power saving is required, when an amount of service data of the terminal is small, or a scenario that a latency requirement is not high, the terminal may not report that it has the full-duplex capability, so as to avoid the network device configuring the terminal to communicate in the first transmission direction within the subband and to communicate in the second transmission direction in the frequency domain resource other than the subband in the same time domain resource, which may cause the terminal to consume more power in a short period of time.

In addition, the resource used by the terminal with full-duplex capability for random access may be the same as the resource used by the terminal without full-duplex capability for random access. In this case, the network device considers that the terminal does not have the full-duplex capability. In other words, the terminal with full-duplex capability may also use the same random access resource as the terminal without full-duplex capability for random access to the network device. In this scenario, it is considered that the terminal with full-duplex capability does not report that it has the full-duplex capability.

In an embodiment, the resource includes at least one of: a code domain resource; or a random access occasion.

In an embodiment, the code domain resource includes a preamble.

FIG. 2 is a schematic flow chart of another capability indication method according to an embodiment of the present disclosure. As shown in FIG. 2, the initiating the random access to the network device includes the following step.

In step S201, a preamble corresponding to a first index is sent to the network device, i.e., an index of the preamble is the first index, in which the preamble corresponding to the first index is used to indicate that the terminal has the full-duplex capability; or a preamble corresponding to a second index is sent to the network device, i.e., an index of the preamble is the second index, in which the preamble corresponding to the second index is used to indicate that the terminal does not have the full-duplex capability.

It should be noted that the embodiment shown in FIG. 2 may be implemented independently or in combination with at least one other embodiment in the present disclosure. The specific embodiment may be selected as needed, which is not limited in the present disclosure. In addition, the terminal with full-duplex capability may also send a preamble corresponding to the second index to the network device. In this case, the network device may determine that the terminal does not have the full-duplex capability. In other words, the terminal with full-duplex capability may report that it does not have the full-duplex capability or does not start the full-duplex function by sending the preamble corresponding to the second index.

In an embodiment, during the random access procedure, the terminal may send the preamble to the network device, and the preamble may have an index. The terminal may use preambles with different indexes to form different indications of the full-duplex capability of the terminal. For example, the preamble corresponding to the first index may indicate that the terminal has the full-duplex capability, or the full-duplex function of the terminal is started; for example, the preamble corresponding to the second index may indicate that the terminal does not have the full-duplex capability, or the full-duplex function of the terminal is not started.

Correspondingly, after receiving the preamble sent by the terminal, the network device may determine the index of the preamble, and then determine whether the terminal has the full-duplex capability according to the index of the preamble. For example, when it is determined that the index of the preamble is the first index, it may be determined that the terminal has the full-duplex capability, and then the terminal may be scheduled to communicate in the subband configured for the terminal. For example, when it is determined that the index of the preamble is the second index, it may be determined that the terminal does not have the full-duplex capability, and then the terminal may be not scheduled to communicate in the subband configured for the terminal.

In an embodiment, the network device may send a common random access channel configuration (RACH-ConfigCommon, where RACH stands for Random Access Channel) to the terminal via a broadcast signaling. The broadcast signaling includes but is not limited to: a System Information Block (SIB), such as SIB1, or other system information (OSI).

A configuration in the common random access channel configuration includes, but is not limited to, a random access occasion (RO), a mapping relationship between a random access occasion and a synchronization signal block (SSB), a total numerical count of preambles, etc. The configuration in the common random access channel configuration may be applicable to multiple terminals (e.g., all terminals in a cell), including terminals with full-duplex capability and terminals without full-duplex capability. In other words, these terminals may use the configuration in the common random access channel configuration for random access.

In an embodiment, the method further includes: determining a range of the first index according to first indication information sent by the network device.

In an embodiment, the network device may carry the first indication information in a broadcast signaling. The first indication information is used to indicate the range of the first index, and the first index is the index of the preamble required to be used when the terminal with full-duplex capability performs the random access. The preamble required to be used belongs to preambles configured by the common random access channel configuration. For example, a starting index S and an ending index E may be indicated, and then the terminal with full-duplex capability may select a preamble corresponding to an index between the index S and the index E to send to the network device when performing the random access, to indicate that it has the full-duplex capability. When the terminal without full-duplex capability performs the random access, it may select a preamble corresponding to an index outside the index S to the index E to send to the network device, to indicate that it does not have the full-duplex capability. Alternatively, when the terminal with full-duplex capability performs the random access, it may also select the preamble corresponding to the index outside the index S to the index E to send to the network device, to indicate that it does not have the full-duplex capability, or it does not start its full-duplex function.

After receiving the preamble sent by the terminal, the network device may determine that the terminal has the full-duplex capability in response to determining that the index of the preamble is between the index S and the index E, and may determine that the terminal does not have the full-duplex capability in response to determining that the index of the preamble is outside the index S to index E.

For example, preambles configured by the common random access channel configuration includes 56 preambles, and indexes are from 0 to 55, namely preamble#0 to preamble#55. The network device may indicate through the first indication information that the preamble corresponding to the index range of 0 to 9 is the preamble to be used by the terminal with full-duplex capability for performing the random access.

When performing the random access, the terminal with full-duplex capability may use any preamble from preamble #0 to preamble #9, so that the network device may determine that the terminal has the full-duplex capability when the index of the preamble sent by the terminal is between 0 and 9. When performing the random access, the terminal without full-duplex capability may use any preamble from preamble #10 to preamble #55, so that the network device may determine that the terminal does not have the full-duplex capability when the index of the preamble sent by the terminal is between 10 and 55.

In an embodiment, the method further includes: determining, according to second indication information sent by the network device, a preamble to be used by the terminal with full-duplex capability for performing the random access.

In an embodiment, the network device may carry the second indication information in a broadcast signaling, and the second indication information is used to indicate the preamble to be used by the terminal with full-duplex capability for performing the random access, in which the preamble to be used does not belong to the preambles configured by the common random access channel configuration. For example, the preambles configured by the common random access channel configuration are preamble#0 to preamble#55, and the network device may additionally indicate preamble#56 to preamble#63 corresponding to indexes 56 to 63 through the second indication information, and indicate that preamble#56 to preamble#63 are used for the terminal with full-duplex capability to initiate the random access.

When performing the random access, the terminal with full-duplex capability may use any preamble from preamble#56 to preamble#63, so that when the index of the preamble sent by the terminal is between 56 and 63, the network device may determine that the terminal has the full-duplex capability. When performing the random access, the terminal without full-duplex capability may use the preamble configured by the common random access channel configuration, for example, use any preamble from preamble#0 to preamble#55, so that when the index of the preamble sent by the terminal is between 0 and 55, the network device may determine that the terminal does not have the full-duplex capability. Or, when performing the random access, the terminal with full-duplex capability may also use the preamble configured by the common random access channel configuration, for example, use any preamble from preamble#0 to preamble#55, so that when the index of the preamble sent by the terminal is between 0 and 55, the network device may consider that the terminal does not have the full-duplex capability or does not start the full-duplex function.

The above embodiments mainly distinguish whether the terminal has the full-duplex capability by the index of the preamble sent during the random access procedure. In this case, the terminal with full-duplex capability and the terminal without full-duplex capability can initiate the random access at the same random access occasion or initiate the random access at different random access occasions. The specific selection can be made as needed, and is not limited in the present disclosure.

FIG. 3 is a schematic flow chart of another capability indication method according to an embodiment of the present disclosure. As shown in FIG. 3, initiating the random access to the network device includes the following step.

In step S301, the random access is initiated to the network device at a first random access occasion, in which the first random access occasion is used to indicate that the terminal has the full-duplex capability; or the random access is initiated to the network device at a second random access occasion, in which the second random access occasion is used to indicate that the terminal does not have the full-duplex capability.

It should be noted that the embodiment shown in FIG. 3 may be implemented independently or in combination with at least one other embodiment in the present disclosure. The specific embodiment may be selected as needed, which is not limited in the present disclosure. In addition, the terminal with full-duplex capability may also initiate the random access to the network device at the second random access occasion. In this case, the network device may determine that the terminal does not have the full-duplex capability.

In an embodiment, the network device may configure multiple random access occasions for the terminal through the common random access channel configuration, and the terminal may select a random access occasion from the multiple random access occasion to initiate the random access to the terminal. For example, different random access occasions may be used to form different indications of the full-duplex capability of the terminal. For example, when the random access is initiated to the network device at the first random access occasion, it may be indicated that the terminal has the full-duplex capability; for example, when random access is initiated to the network device at the second random access occasion, it may be indicated that the terminal does not have the full-duplex capability.

Correspondingly, when the network device and the terminal perform the random access, the random access occasion used by the terminal for random access may be determined, and then whether the terminal has the full-duplex capability may be determined according to the random access occasion. For example, when it is determined that the terminal performs the random access at the first random access occasion, it may be determined that the terminal has the full-duplex capability, and then the terminal may be scheduled to communicate in the subband configured for the terminal. For example, when it is determined that the terminal performs the random access at the second random access occasion, it may be determined that the terminal does not have the full-duplex capability, and then the terminal may be not scheduled to communicate in the subband configured for the terminal.

In an embodiment, the network device may send the common random access channel configuration to the terminal via a broadcast signaling. The broadcast signaling includes but is not limited to: a system information block, such as SIB1, or other system information.

The configuration in the common random access channel configuration includes but is not limited to: a random access occasion, a mapping relationship between a random access occasion and a synchronization signal block, a total numerical count of preambles, etc. The configuration in the common random access channel configuration is applicable to all terminals, that is, terminals with full-duplex capability and terminals without full-duplex capability may use the configuration in the common random access channel configuration for random access.

In an embodiment, the first random access occasion is a random access occasion determined according to the common random access channel configuration; and/or the second random access occasion is a random access occasion determined according to the common random access channel configuration.

In an embodiment, the method further includes: determining, based on third indication information sent by the network device, a random access occasion to be used by the terminal with full-duplex capability for performing the random access, and/or a random access occasion to be used by the terminal without full-duplex capability for performing the random access.

In an embodiment, the network device may carry the third indication information in a broadcast signaling. The third indication information is used to indicate the random access occasion to be used by the terminal with full-duplex capability for performing the random access, and/or to indicate the random access occasion to be used by the terminal without full-duplex capability for performing the random access. The random access occasion to be used by the terminal with full-duplex capability for performing the random access and/or the random access occasion to be used by the terminal without full-duplex capability for performing the random access may belong to random access occasions configured by the common random access channel configuration. For example, RO#1 may be indicated among the multiple random access occasions RO#1 to RO#10 configured by the common random access channel configuration, and then the terminal with full-duplex capability may perform the random access on RO#1, and the terminal without full-duplex capability may perform the random access on any RO from RO#2 to RO#9.

When the network device performs the random access with the terminal, if it determines that the random access occasion used by the terminal is RO#1, it may be determined that the terminal has the full-duplex capability, and if it determines that the random access occasion used by the terminal is any RO from RO#2 to RO#9, it may be determined that the terminal does not have the full-duplex capability.

In an embodiment, the second random access occasion is a random access occasion determined according to the common random access channel configuration; and/or the first random access occasion is a random access occasion determined according to the second random access occasion and a frequency domain offset.

In an embodiment, after determining the second random access occasion according to the common random access channel configuration, the terminal with full-duplex capability may determine the first random access occasion based on the second random access occasion and the frequency domain offset, for example, by adding the frequency domain offset to the second random access occasion to obtain the first random access occasion.

Accordingly, when the terminal with full-duplex capability performs the random access, it does not need to use the random access occasion configured by the common random access channel configuration, thereby not occupying the random access occasion that can be used by the terminal without full-duplex capability when performing the random access. Thus, when the terminal without full-duplex capability performs the random access, it can use any random access occasion configured by the common random access channel configuration.

Fig. 4A is a schematic diagram showing random access occasions according to an embodiment of the present disclosure. Fig. 4B is a schematic diagram showing other random access occasions according to an embodiment of the present disclosure.

As shown in FIG. 4A, for example, an RACH configuration index in the common random access channel configuration of the network device is equal to 27. In this configuration, the random access occasions may be distributed in multiple slots, and one random access occasion exists in each slot.

For example, a time division duplexing (TDD) structure determined by the terminal according to a TDD uplink-downlink (UL-DL) configuration is DDDSUDDDSU, in which "D" represents a DL slot, "S" represents a flexible slot, and "U" represents a UL slot. That is, slot#0 to slot#2 and slot#5 to slot#7 are downlink slots, slot#3 and slot#8 are flexible slots, and slot#4 and slot#9 are uplink slots.

Accordingly, it may be determined that uplink communication may only be performed in slot#4 and slot#9, so the random access may only be initiated in slot#4 and slot#9. Then only the random access occasions corresponding to slot#4 and slot#9 are valid random access occasions (Valid ROs), and the random access occasions corresponding to other slots are invalid random access occasions (Invalid ROs).

Further, as shown in FIG. 4B, the valid random access occasion may be used as the second random access occasion, and then the frequency domain offset is performed on the valid random access occasion, for example, the frequency domain offset is Δoffset, so that the random access occasion obtained after the offset may be used as the first random access occasion. The frequency domain offset may be a numerical value, and the unit of the frequency domain offset includes but is not limited to a resource block (RB), a resource element (RE), and a bandwidth (Hz, KHz, MHz, GHz, etc.).

The first random access occasion may be a random access occasion specific for the terminal with full-duplex capability. The terminal with full-duplex capability may initiate the random access to the network device at the first random access occasion, and the network device may determine that the terminal has the full-duplex capability. Or, the terminal with full-duplex capability may also initiate the random access to the network device at the second random access occasion, and the network device may determine that the terminal does not have the full-duplex capability. The terminal without full-duplex capability may only initiate the random access to the network device at the second random access occasion, and the network device may determine that the terminal does not have the full-duplex capability.

In an embodiment, the frequency domain offset is determined based on indication information sent by the network device, and/or the frequency domain offset is determined based on a protocol agreement.

In an embodiment, the first random access occasion is a random access occasion determined according to a first random access channel configuration; and/or the second random access occasion is a random access occasion determined according to a second random access channel configuration.

In an embodiment, the network device may broadcast multiple random access channel configurations through a broadcast signaling, and may indicate the applicable scope of each random access channel configuration. For example, the first random access channel configuration and the second random access channel configuration may be broadcasted, and it may be indicated that the first random access channel configuration is applicable to the terminal with full-duplex capability, and the second random access channel configuration is applicable to all terminals in the cell (including the terminal with full-duplex capability and the terminal without full-duplex capability).

Since the random access occasion configured by the first random access channel configuration and the random access occasion configured by the second random access channel configuration may be different, it is possible to ensure that the first random access occasion and the second random access occasion are different, thereby ensuring that whether the terminal has the full-duplex capability or not can be distinguished through the first random access occasion and the second random access occasion.

Furthermore, when performing the random access, the terminal with full-duplex capability may use the first random access occasion determined according to the first random access channel configuration, and the network device may determine that the terminal performing the random access has the full-duplex capability according to the first random access occasion. When performing the random access, the terminal that does not have the full-duplex capability may use the second random access occasion determined according to the second random access channel configuration, and the network device may determine that the terminal performing the random access does not have the full-duplex capability according to the second random access occasion.

In an embodiment, the first random access channel configuration is a full-duplex terminal-specific random access channel configuration; and/or the second random access channel configuration is a common random access channel configuration.

In an embodiment, when the first random access occasion does not overlap with the second random access occasion, the first random access occasion is used to indicate that the terminal has the full-duplex capability; and/or when the first random access occasion overlaps with the second random access occasion, the first random access occasion is used to indicate that the terminal does not have the full-duplex capability.

In an embodiment, the network device may configure multiple first random access occasions through the first random access channel configuration, and may configure multiple second random access occasions through the second random access channel configuration. There may be non-overlapping random access occasions and overlapping random access occasions between the multiple first random access occasions and the multiple second random access occasions. When the terminal uses a first random access occasion for random access, if the first random access occasion overlaps with a second random access occasion, the network device may determine that the terminal does not have the full-duplex capability; if the first random access occasion does not overlap with the second random access occasion, the network device may determine that the terminal has the full-duplex capability.

The above embodiments mainly distinguish whether the terminal has the full-duplex capability or not by the random access occasion used in the random access procedure. In this case, the terminal with full-duplex capability and the terminal without full-duplex capability can use the preamble with the same index to initiate the random access, and also use the preambles with different indexes to initiate the random access. The specific selection can be made as needed, which is not limited in the present disclosure.

Fig. 5 is a schematic flow chart of a capability determination method according to an embodiment of the present disclosure. The capability determination method shown in this embodiment can be performed by a network device, and the network device may communicate with a terminal, the network device includes but is not limited to a base station in a communication system, such as a 4G base station, a 5G base station, and a 6G base station, and the terminal includes but is not limited to a mobile phone, a tablet computer, a wearable device, a sensor, an Internet of Things device, and other communication apparatuses.

As shown in FIG. 5, the capability determination method may include following steps.

In step S501, random access is performed with the terminal;
In step S502, it is determined whether the terminal has a full-duplex capability according to a resource used by the terminal for random access.

In an embodiment, when the terminal needs to establish a communication connection, the network device may perform the random access with the terminal. The random access may be a four-step random access or a two-step random access, which may be selected according to requirements and is not limited by the present disclosure.

During the random access, the terminal may implicitly indicate to the network device that the terminal has the full-duplex capability or does not have the full-duplex capability through the resource used for random access, in which the full-duplex may also be referred to as subband full duplex (SBFD).

Correspondingly, during the random access with the terminal, the network device may determine the terminal has the full-duplex capability or does not have the full-duplex capability based on the resource used by the terminal for the random access, so that the terminal may be properly configured and/or scheduled based on the capability of the terminal.

In an embodiment, when the network device determines that the terminal does not have the full-duplex capability, the network device may not configure a subband for the terminal.

For example, no downlink subband is configured for the terminal in an uplink time domain resource; for example, no uplink subband is configured for the terminal in a downlink time domain resource. In this way, the problems caused by the terminal without full-duplex capability attempting the full-duplex communication in the time domain resource can be avoided, and the waste of frequency domain resource caused by configuring the subband for the terminal can be avoided.

In an embodiment, the time domain resource includes at least one of: a slot, a symbol. For example, the symbol may be an OFDM symbol.

In an embodiment, when the network device determines that the terminal does not have the full-duplex capability, the network device does not schedule the terminal to communicate on the subband, even if the subband is configured for the terminal.

In an embodiment, the network device may configure a subband for the terminal when determining that the terminal has the full-duplex capability. In an embodiment, the network device may also schedule the terminal to communicate on the subband when configuring the subband for the terminal.

For example, if a downlink subband is configured for the terminal in an uplink time domain resource, the terminal may be scheduled to perform downlink communication in the downlink subband of the uplink time domain resource, and the terminal may also be scheduled to perform uplink communication in a frequency domain resource other than the downlink subband corresponding to the uplink time domain resource, thereby realizing the full-duplex communication of the terminal in the uplink time domain resource.

For example, if an uplink subband is configured for the terminal in a downlink time domain resource, the terminal may be scheduled to perform uplink communication in the uplink subband of the downlink time domain resource, and the terminal may also be scheduled to perform downlink communication in a frequency domain resource other than the uplink subband corresponding to the downlink time domain resource, thereby realizing the full-duplex communication of the terminal in the downlink time domain resource.

For example, if an uplink subband is configured for the terminal in a flexible time domain resource, the terminal may be scheduled to perform uplink communication in the uplink subband of the flexible time domain resource, and the terminal may also be scheduled to perform downlink communication in a frequency domain resource other than the uplink subband corresponding to the flexible time domain resource, thereby realizing the full-duplex communication of the terminal in the flexible time domain resources.

In an embodiment, the network device may first configure subbands for multiple terminals (e.g., all terminals in the same cell). Then, it is determined whether each terminal has the full-duplex capability according to the random access procedure of each terminal. For a terminal with full-duplex capability, the terminal with full-duplex capability is scheduled to communicate on the subband, while the terminal without full-duplex capability is not scheduled to communicate on the subband.

For example, uplink subbands are configured for terminal #1, terminal #2, and terminal #3 in the downlink time domain resource. During the random access procedure, terminal #1, terminal #2, and terminal #3 respectively indicate whether they have the full-duplex capability through the resources used for random access. For example, terminal #3 has the full-duplex capability, while terminal #1 and terminal #2 do not have the full-duplex capability.

The network device may schedule terminal #3 to perform the uplink communication in the uplink subband of the downlink time domain resource, and/or schedule terminal #3 to perform downlink communication in the frequency domain resource other than the uplink subband corresponding to the downlink time domain resource, thereby realizing the full-duplex communication of terminal #3 in the downlink time domain resource. The base station does not schedule terminal #1 or terminal #2 to perform the uplink communication in the uplink subband of the downlink time domain resource, so as to avoid problems caused by terminal #1 and terminal #2 attempting to perform the full-duplex communication without full-duplex capability.

It can be seen that according to the embodiments of the present disclosure, the network device can determine whether the terminal has the full-duplex capability or not based on the resource used by the terminal for random access, so that the network device can make appropriate configuration and scheduling for the terminal according to the capability of the terminal. This is beneficial for ensuring that the terminal with full-duplex capability can be scheduled by the network device in time for the full-duplex communication, thereby improving the communication efficiency and avoiding problems caused by the terminal without full-duplex capability being scheduled by the network device for the full-duplex communication.

It should be noted that the resource used by the terminal with full-duplex capability for random access may be the same as the resource used by the terminal without full-duplex capability for random access. In this case, the network device considers that the terminal does not have the full-duplex capability. In other words, the terminal with full-duplex capability may also use the same random access resource as the terminal without full-duplex capability for random access to the network device. In this scenario, it is considered that the terminal with full-duplex capability does not report that it has the full-duplex capability.

In an embodiment, the resource includes at least one of: a code domain resource; or a random access occasion.

In an embodiment, the code domain resources include a preamble.

In an embodiment, determining whether the terminal has the full-duplex capability based on the resource used by the terminal for random access includes: determining that the terminal has the full-duplex capability in response to determining that the terminal sending a preamble corresponding to a first index; and/or determining that the terminal does not have the full-duplex capability in response to determining that the terminal sends a preamble corresponding to a second index. That is, the terminal with full-duplex capability may report that it does not have the full-duplex capability or does not start the full-duplex function by sending the preamble corresponding to the second index.

In an embodiment, during the random access procedure, the network device may receive the preamble sent by the terminal, and the preamble may have an index. The network device may determine the full-duplex capability of the terminal according to preambles with different indexes. For example, when receiving the preamble corresponding to the first index, it may be determined that the terminal has the full-duplex capability, or the full-duplex function of the terminal is started, and the terminal may be scheduled to perform communication in the subband configured for the terminal. For example, when receiving the preamble corresponding to the second index, it may be determined that the terminal does not have the full-duplex capability, or the full-duplex function of the terminal is not started, and the terminal may not be scheduled to perform communication in the subband configured for the terminal.

In an embodiment, the network device may send a common random access channel configuration (RACH-ConfigCommon) to the terminal via a broadcast signaling. The broadcast signaling includes but is not limited to: a System Information Block (SIB), such as SIB1, or other system information (OSI).

A configuration in the common random access channel configuration includes, but is not limited to, a random access occasion (RO), a mapping relationship between a random access occasion and a synchronization signal block (SSB), a total numerical count of preambles, etc. The configuration in the common random access channel configuration may be applicable to multiple terminals (e.g., all terminals in a cell), including terminals with full-duplex capability and terminals without full-duplex capability. In other words, these terminals may use the configuration in the common random access channel configuration for random access.

In an embodiment, the method further includes: sending first indication information to the terminal, in which the first indication information is used to indicate a range of the first index.

In an embodiment, the network device may carry the first indication information in a broadcast signaling. The first indication information is used to indicate the range of the first index, and the first index is the index of the preamble required to be used when the terminal with full-duplex capability performs the random access. The preamble required to be used belongs to preambles configured by the common random access channel configuration. For example, a starting index S and an ending index E may be indicated, and then the terminal with full-duplex capability may select a preamble corresponding to an index between the index S and the index E to send to the network device when performing the random access, to indicate that it has the full-duplex capability. When the terminal without full-duplex capability performs the random access, it may select a preamble corresponding to an index outside the index S to the index E to send to the network device, to indicate that it does not have the full-duplex capability. Alternatively, when the terminal with full-duplex capability performs the random access, it may also select the preamble corresponding to the index outside the index S to the index E to send to the network device, to indicate that it does not have the full-duplex capability, or it does not start its full-duplex function.

After receiving the preamble sent by the terminal, the network device may determine that the terminal has the full-duplex capability in response to determining that the index of the preamble is between the index S and the index E, and may determine that the terminal does not have the full-duplex capability in response to determining that the index of the preamble is outside the index S to index E.

For example, preambles configured by the common random access channel configuration includes 56 preambles, and indexes are from 0 to 55, namely preamble#0 to preamble#55. The network device may indicate through the first indication information that the preamble corresponding to the index range of 0 to 9 is the preamble to be used by the terminal with full-duplex capability for performing the random access.

When performing the random access, the terminal with full-duplex capability may use any preamble from preamble #0 to preamble #9, so that the network device may determine that the terminal has the full-duplex capability when the index of the preamble sent by the terminal is between 0 and 9. When performing the random access, the terminal without full-duplex capability may use any preamble from preamble #10 to preamble #55, so that the network device may determine that the terminal does not have the full-duplex capability when the index of the preamble sent by the terminal is between 10 and 55.

In an embodiment, the method further includes: sending second indication information to the terminal, in which the second indication information is used to indicate a preamble to be used by the terminal with full-duplex capability for performing the random access.

In an embodiment, the network device may carry the second indication information in a broadcast signaling, and the second indication information is used to indicate the preamble to be used by the terminal with full-duplex capability for performing the random access, in which the preamble to be used does not belong to the preambles configured by the common random access channel configuration. For example, the preambles configured by the common random access channel configuration are preamble#0 to preamble#55, and the network device may additionally indicate preamble#56 to preamble#63 corresponding to indexes 56 to 63 through the second indication information, and indicate that preamble#56 to preamble#63 are used for the terminal with full-duplex capability to initiate the random access.

When performing the random access, the terminal with full-duplex capability may use any preamble from preamble#56 to preamble#63, so that when the index of the preamble sent by the terminal is between 56 and 63, the network device may determine that the terminal has the full-duplex capability. When performing the random access, the terminal without full-duplex capability may use the preamble configured by the common random access channel configuration, for example, use any preamble from preamble#0 to preamble#55, so that when the index of the preamble sent by the terminal is between 0 and 55, the network device may determine that the terminal does not have the full-duplex capability. Or, when performing the random access, the terminal with full-duplex capability may also use the preamble configured by the common random access channel configuration, for example, use any preamble from preamble#0 to preamble#55, so that when the index of the preamble sent by the terminal is between 0 and 55, the network device may consider that the terminal does not have the full-duplex capability or does not start the full-duplex function.

The above embodiments mainly distinguish whether the terminal has the full-duplex capability by the index of the preamble sent during the random access procedure. In this case, the terminal with full-duplex capability and the terminal without full-duplex capability can initiate the random access at the same random access occasion or initiate the random access at different random access occasions. The specific selection can be made as needed, and is not limited in the present disclosure.

In an embodiment, determining whether the terminal has the full-duplex capability based on the resource used by the terminal for random access includes: in response to determining that the terminal initiates the random access at a first random access occasion, determining that the terminal has the full-duplex capability; or in response to determining that the terminal initiates the random access at a second random access occasion, determining that the terminal does not have the full-duplex capability.

In an embodiment, the network device may configure multiple random access occasions for the terminal through the common random access channel configuration, and the network device may distinguish the full-duplex capability of the terminal according to the random access occasion used by the terminal for random access. For example, when it is determined that the terminal initiates the random access through the first random access occasion, it may be determined that the terminal has the full-duplex capability, and then the terminal may be scheduled to communicate in the subband configured for the terminal. For example, when it is determined that the terminal initiates the random access through the second random access occasion, it may be determined that the terminal does not have the full-duplex capability, and then the terminal may be not scheduled to communicate in the subband configured for the terminal.

In an embodiment, the network device may send the common random access channel configuration to the terminal via a broadcast signaling. The broadcast signaling includes but is not limited to: a system information block, such as SIB1, or other system information.

The configuration in the common random access channel configuration includes but is not limited to: a random access occasion, a mapping relationship between a random access occasion and a synchronization signal block, a total numerical count of preambles, etc. The configuration in the common random access channel configuration is applicable to all terminals, that is, terminals with full-duplex capability and terminals without full-duplex capability may use the configuration in the common random access channel configuration for random access.

In an embodiment, the first random access occasion is a random access occasion determined according to the common random access channel configuration; and/or the second random access occasion is a random access occasion determined according to the common random access channel configuration.

In an embodiment, the method further includes: sending third indication information to the terminal, in which the third indication information is used to indicate a random access occasion to be used by the terminal with full-duplex capability for performing the random access, and/or a random access occasion to be used by the terminal without full-duplex capability for performing the random access.

In an embodiment, the network device may carry the third indication information in a broadcast signaling. The third indication information is used to indicate the random access occasion to be used by the terminal with full-duplex capability for performing the random access, and/or to indicate the random access occasion to be used by the terminal without full-duplex capability for performing the random access. The random access occasion to be used by the terminal with full-duplex capability for performing the random access and/or the random access occasion to be used by the terminal without full-duplex capability for performing the random access may belong to random access occasions configured by the common random access channel configuration. For example, RO#1 may be indicated among the multiple random access occasions RO#1 to RO#10 configured by the common random access channel configuration, and then the terminal with full-duplex capability may perform the random access on RO#1, and the terminal without full-duplex capability may perform the random access on any RO from RO#2 to RO#9.

When the network device performs the random access with the terminal, if it determines that the random access occasion used by the terminal is RO#1, it may be determined that the terminal has the full-duplex capability, and if it determines that the random access occasion used by the terminal is any RO from RO#2 to RO#9, it may be determined that the terminal does not have the full-duplex capability.

In an embodiment, the second random access occasion is a random access occasion determined according to the common random access channel configuration; and/or the first random access occasion is a random access occasion determined according to the second random access occasion and a frequency domain offset.

In an embodiment, the first random access occasion may be determined by performing the frequency domain offset on the second random access occasion, for example, the first random access occasion is obtained by adding the frequency domain offset to the second random access occasion. In this case, when the terminal with full-duplex capability performs the random access, it does not need to use the random access occasion configured by the common random access channel configuration, thereby not occupying the random access occasion that can be used by the terminal without full-duplex capability when performing the random access. Thus, when the terminal without full-duplex capability performs the random access, it can use any random access occasion configured by the common random access channel configuration.

As shown in FIG. 4A, for example, an RACH configuration index in the common random access channel configuration of the network device is equal to 27. In this configuration, the random access occasions may be distributed in multiple slots, and one random access occasion exists in each slot.

For example, a TDD structure indicated by the network device through a TDD UL-DL configuration is DDDSUDDDSU, in which "D" represents a DL slot, "S" represents a flexible slot, and "U" represents a UL slot. That is, slot#0 to slot#2 and slot#5 to slot#7 are downlink slots, slot#3 and slot#8 are flexible slots, and slot#4 and slot#9 are uplink slots.

Accordingly, it may be determined that uplink communication may only be performed by the terminal in slot#4 and slot#9, so the random access may only be initiated in slot#4 and slot#9. Then only the random access occasions corresponding to slot#4 and slot#9 are valid random access occasions (Valid ROs), and the random access occasions corresponding to other slots are invalid random access occasions (Invalid ROs).

Further, as shown in FIG4B , the valid random access occasion may be used as the second random access occasion, and then the frequency domain offset is performed on the valid random access occasion, for example, the frequency domain offset is Δoffset, so that the random access occasion obtained after the offset may be used as the first random access occasion. The frequency domain offset may be a numerical value, and the unit of the frequency domain offset includes but is not limited to an RB, an RE, and a bandwidth (Hz, KHz, MHz, GHz, etc.).

The first random access occasion may be a random access occasion specific for the terminal with full-duplex capability. The terminal with full-duplex capability may initiate the random access to the network device at the first random access occasion, and the network device may determine that the terminal has the full-duplex capability. Or, the terminal with full-duplex capability may also initiate the random access to the network device at the second random access occasion, and the network device may determine that the terminal does not have the full-duplex capability. The terminal without full-duplex capability may only initiate the random access to the network device at the second random access occasion, and the network device may determine that the terminal does not have the full-duplex capability.

In an embodiment, the method further includes: determining the frequency domain offset, and indicating the frequency domain offset to the terminal through indication information; and/or determining the frequency domain offset based on a protocol agreement.

In an embodiment, the first random access occasion is a random access occasion determined according to a first random access channel configuration; and/or the second random access occasion is a random access occasion determined according to a second random access channel configuration.

In an embodiment, the network device may broadcast multiple random access channel configurations through a broadcast signaling, and may indicate the applicable scope of each random access channel configuration. For example, the first random access channel configuration and the second random access channel configuration may be broadcasted, and it may be indicated that the first random access channel configuration is applicable to all terminals in the cell (including the terminal with full-duplex capability and the terminal without full-duplex capability).

Since the random access occasion configured by the first random access channel configuration and the random access occasion configured by the second random access channel configuration may be different, it is possible to ensure that the first random access occasion and the second random access occasion are different, thereby ensuring that whether the terminal has the full-duplex capability or not can be distinguished through the first random access occasion and the second random access occasion.

Furthermore, when performing the random access, the terminal with full-duplex capability may use the first random access occasion determined according to the first random access channel configuration, and the network device may determine that the terminal performing the random access has the full-duplex capability according to the first random access occasion. When performing the random access, the terminal that does not have the full-duplex capability may use the second random access occasion determined according to the second random access channel configuration, and the network device may determine that the terminal performing the random access does not have the full-duplex capability according to the second random access occasion.

In an embodiment, the first random access channel configuration is a full-duplex terminal-specific random access channel configuration; and/or the second random access channel configuration is a common random access channel configuration.

In an embodiment, determining whether the terminal has the full-duplex capability according to the resource used by the terminal for random access further includes:
when the first random access occasion does not overlap with the second random access occasion, determining that the terminal has the full-duplex capability; and/or when the first random access occasion overlaps with the second random access occasion, determining that the terminal does not have the full-duplex capability.

In an embodiment, the network device may configure multiple first random access occasions through the first random access channel configuration, and may configure multiple second random access occasions through the second random access channel configuration. There may be non-overlapping random access occasions and overlapping random access occasions between the multiple first random access occasions and the multiple second random access occasions. When the terminal uses a first random access occasion for random access, if the first random access occasion overlaps with a second random access occasion, the network device may determine that the terminal does not have the full-duplex capability; if the first random access occasion does not overlap with the second random access occasion, the network device may determine that the terminal has the full-duplex capability.

The above embodiments mainly distinguish whether the terminal has the full-duplex capability or not by the random access occasion used in the random access procedure. In this case, the terminal with full-duplex capability and the terminal without full-duplex capability can use the preamble with the same index to initiate the random access, and also use the preambles with different indexes to initiate the random access. The specific selection can be made as needed, which is not limited in the present disclosure.

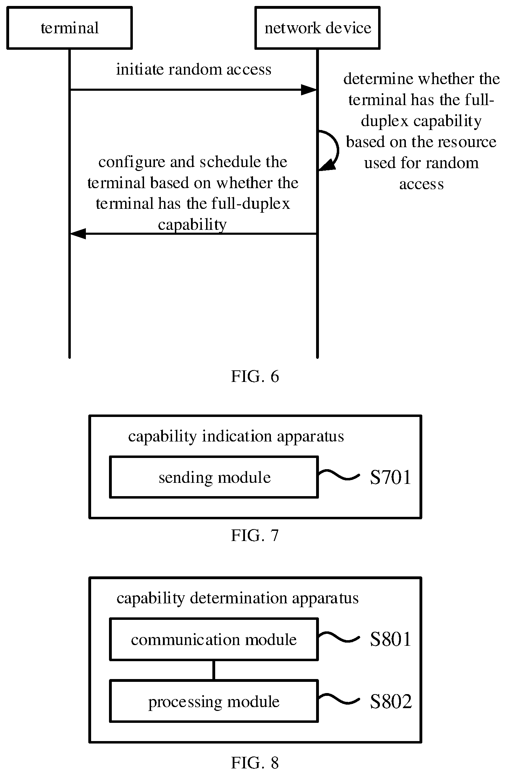

FIG. 6 is a schematic diagram showing interaction between a terminal and a network device according to an embodiment of the present disclosure.

As shown in FIG. 6, when the terminal needs to establish a communication connection with the network device, it may initiate random access to the network device and implicitly indicate whether the terminal has a full-duplex capability through a resources used for random access. For example, the terminal may indicate whether the terminal has the full-duplex capability through a preamble used for random access, a random access occasion, etc.

Correspondingly, the network device may determine whether the terminal has the full-duplex capability based on the resource used by the terminal for random access, so as to appropriately configure and schedule the terminal. For example, if it is determined that the terminal has the full-duplex capability, the terminal may be scheduled to communicate in the subband configured for the terminal, and if it is determined that the terminal does not have the full-duplex capability, the terminal is not scheduled to communicate in the subband configured for the terminal.

In an embodiment, the terminal may send a preamble to the network device, in which the index of the preamble is used to indicate whether the terminal has the full-duplex capability.

For example, the terminal may form different indications of the full-duplex capability of the terminal through preambles with different indexes. For example, a preamble corresponding to a first index may indicate that the terminal has the full-duplex capability, or the full-duplex function of the terminal is started. For example, a preamble corresponding to a second index may indicate that the terminal does not have the full-duplex capability, or the full-duplex function of the terminal is not started.

Correspondingly, after receiving the preamble sent by the terminal, the network device may determine the index of the preamble, and then determine whether the terminal has the full-duplex capability according to the index of the preamble. For example, when it is determined that the index of the preamble is the first index, it may be determined that the terminal has the full-duplex capability, and then the terminal may be scheduled to communicate in the subband configured for the terminal. For example, when it is determined that the index of the preamble is the second index, it may be determined that the terminal does not have the full-duplex capability, and then the terminal may be not scheduled to communicate in the subband configured for the terminal.

In an embodiment, the terminal may initiate the random access to the network device, in which a random access occasion used for the random access is used to indicate whether the terminal has the full-duplex capability.

For example, the terminal may form different indications of the full-duplex capability of the terminal through different random access occasions. For example, when initiating the random access to the network device at a first random access occasion, it may be indicated that the terminal has the full-duplex capability. For example, when initiating the random access to the network device at a second random access occasion, it may be indicated that the terminal does not have the full-duplex capability.

Correspondingly, when the network device and the terminal perform the random access, the random access occasion used by the terminal for random access may be determined, and then whether the terminal has the full-duplex capability may be determined according to the random access occasion. For example, when it is determined that the terminal performs random access at the first random access occasion, it may be determined that the terminal has the full-duplex capability, and then the terminal may be scheduled to communicate in the subband configured for the terminal. For example, when it is determined that the terminal performs the random access at the second random access occasion, it may be determined that the terminal does not have the full-duplex capability, and then the terminal may be not scheduled to communicate in the subband configured for the terminal.

In an embodiment, the first random access occasion is a random access occasion determined according to a common random access channel configuration; and/or the second random access occasion is a random access occasion determined according to a common random access channel configuration.

For example, the network device may carry third indication information in a broadcast signaling, and the third indication information is used to indicate the random access occasion to be used by the terminal with full-duplex capability for performing random access, and/or to indicate the random access occasion to be used by the terminal without full-duplex capability for performing random access, in which the random access occasion to be used by the terminal with full-duplex capability for performing the random access and the random access occasion to be used by the terminal without full-duplex capability for performing random access may both belong to the random access occasions configured by the common random access channel configuration.

In an embodiment, the second random access occasion is a random access occasion determined according to a common random access channel configuration; and/or the first random access occasion is a random access occasion determined according to the second random access occasion and a frequency domain offset.

For example, after determining the second random access occasion according to the common random access channel configuration, the terminal with full-duplex capability may determine the first random access occasion based on the second random access occasion and the frequency domain offset, for example, by adding the frequency domain offset to the second random access occasion to obtain the first random access occasion.

In an embodiment, the first random access occasion is a random access occasion determined according to a first random access channel configuration; and/or the second random access occasion is a random access occasion determined according to a second random access channel configuration.

For example, the network device may broadcast multiple random access channel configurations through a broadcast signaling, and may indicate an applicable scope of each random access channel configuration. For example, the first random access channel configuration and the second random access channel configuration are broadcasted, and it is indicated that the first random access channel configuration is applicable to the terminal with full-duplex capability, and the second random access channel configuration is applicable to all terminals in the cell (including the terminal with full-duplex capability and the terminal without full-duplex capability).

It should be noted that for other contents involved in the embodiments, reference can be made to the description of the relevant contents in the above-mentioned embodiments, which will not be repeated here.

Corresponding to the above embodiments of the capability indication methods and the capability determination methods, the present disclosure also provides embodiments of a capability indication apparatus and a capability determination apparatus.

FIG7 is a schematic block diagram of a capability indication apparatus according to an embodiment of the present disclosure. As shown in FIG. 7, the capability indication apparatus includes:
a sending module 701, configured to initiate random access to a network device, in which the resource used for the random access is used to indicate whether the terminal has a full-duplex capability.

In an embodiment, the resource includes at least one of: a code domain resource; or a random access occasion.

In an embodiment, the code domain resource includes a preamble.

In an embodiment, the sending module is configured to send a preamble corresponding to a first index to the network device, in which the preamble corresponding to the first index is used to indicate that the terminal has the full-duplex capability; and/or to send a preamble corresponding to a second index to the network device, in which the preamble corresponding to the second index is used to indicate that the terminal does not have the full-duplex capability.

In an embodiment, the apparatus further includes a processing module, configured to determine a range of the first index according to first indication information sent by the network device.

In an embodiment, the apparatus further includes a processing module, configured to determine, according to second indication information sent by the network device, a preamble to be used by a terminal with full-duplex capability for performing the random access.

In an embodiment, the sending module is configured to initiate the random access to the network device at a first random access occasion, in which the first random access occasion is used to indicate that the terminal has the full-duplex capability; and/or to initiate the random access to the network device at a second random access occasion, in which the second random access occasion is used to indicate that the terminal does not have the full-duplex capability.

In an embodiment, the first random access occasion is a random access occasion determined according to a common random access channel configuration; and/or the second random access occasion is a random access occasion determined according to a common random access channel configuration.

In an embodiment, the apparatus further includes a processing module, configured to determine, according to third indication information sent by the network device, a random access occasion to be used by a terminal with full-duplex capability for performing the random access, and/or a random access occasion to be used by a terminal without full-duplex capability for performing the random access.

In an embodiment, the second random access occasion is a random access occasion determined according to a common random access channel configuration, and the first random access occasion is a random access occasion determined according to the second random access occasion and a frequency domain offset.

In an embodiment, the frequency domain offset is determined based on indication information sent by the network device, and/or the frequency domain offset is determined based on a protocol agreement.

In an embodiment, the first random access occasion is a random access occasion determined according to a first random access channel configuration, and the second random access occasion is a random access occasion determined according to a second random access channel configuration.

In an embodiment, the first random access channel configuration is a full-duplex terminal-specific random access channel configuration; and/or the second random access channel configuration is a common random access channel configuration.

In an embodiment, when the first random access occasion does not overlap with the second random access occasion, the first random access occasion is used to indicate that the terminal has the full-duplex capability; and/or when the first random access occasion overlaps with the second random access occasion, the first random access occasion is used to indicate that the terminal does not have the full-duplex capability.

FIG. 8 is a schematic block diagram of a capability determination apparatus according to an embodiment of the present disclosure. As shown in FIG. 8, the capability determination apparatus includes:
a communication module 801, configured to perform random access with a terminal; and
a processing module 802, configured to determine whether the terminal has a full-duplex capability according to a resource used by the terminal for random access.

In an embodiment, the resource includes at least one of: a code domain resource; or a random access occasion.

In an embodiment, the code domain resource includes a preamble.

In an embodiment, the processing module is configured to determine that the terminal has the full-duplex capability in response to determining that the terminal sends a preamble corresponding to a first index; and/or determine that the terminal does not have the full-duplex capability in response to determining that the terminal sends a preamble corresponding to a second index.

In an embodiment, the communication module is further configured to send first indication information to the terminal, in which the first indication information is used to indicate a range of the first index.

In an embodiment, the communication module is further configured to send second indication information to the terminal, in which the second indication information is used to indicate a preamble to be used by a terminal with full-duplex capability for performing the random access.

In an embodiment, the processing module is configured to determine that the terminal has the full-duplex capability in response to determining that the terminal initiates the random access at a first random access occasion; and/or determine that the terminal does not have the full-duplex capability in response to determining that the terminal initiates the random access at a second random access occasion.

In an embodiment, the first random access occasion is a random access occasion determined according to a common random access channel configuration; and/or the second random access occasion is a random access occasion determined according to a common random access channel configuration.

In an embodiment, the communication module is further configured to send third indication information to the terminal, in which the third indication information is used to indicate a random access occasion to be used by a terminal with full-duplex capability for performing the random access, and/or a random access occasion to be used by a terminal without full-duplex capability for performing the random access.

In an embodiment, the second random access occasion is a random access occasion determined according to a common random access channel configuration, and the first random access occasion is a random access occasion determined according to the second random access occasion and a frequency domain offset.

In an embodiment, the processing module is further configured to determine the frequency domain offset, and indicate the frequency domain offset to the terminal through indication information; and/or determine the frequency domain offset based on a protocol agreement.

In an embodiment, the first random access occasion is a random access occasion determined according to a first random access channel configuration, and the second random access occasion is a random access occasion determined according to a second random access channel configuration.

In an embodiment, the first random access channel configuration is a full-duplex terminal-specific random access channel configuration; and/or the second random access channel configuration is a common random access channel configuration.

In an embodiment, the processing module is further configured to determine that the terminal has the full-duplex capability when the first random access occasion does not overlap with the second random access occasion; and/or determine that the terminal does not have the full-duplex capability when the first random access occasion overlaps with the second random access occasion.

For the apparatus embodiments, since they basically corresponds to the method embodiments, for the relevant parts, reference can be made to the partial description of the method embodiments. The apparatus embodiments described above are only illustrative. The modules described as separate components may or may not be physically separated, and the components displayed as modules may or may not be physical modules. That is, they may be located in one place, or they may be distributed on multiple network modules. Some or all of the modules may be selected according to actual needs to achieve the purpose of the schemes of the embodiments. Those of ordinary skill in the art can understand and implement them without paying creative labor.

The embodiments of the present disclosure further propose a capability indication system, including a terminal and a network device, in which the terminal is configured to implement the capability indication method described in any of the above embodiments, and the network device is configured to implement the capability determination method described in any of the above embodiments.

The embodiments of the present disclosure further provide a communication apparatus, including: a processor; and a memory for storing a computer program. When the computer program is executed by the processor, the capability indication method described in any of the above embodiments is implemented.

The embodiments of the present disclosure further provide a communication apparatus, including: a processor; and a memory for storing a computer program. When the computer program is executed by the processor, the capability determination method described in any of the above embodiments is implemented.

The embodiments of the present disclosure further provide a computer-readable storage medium for storing a computer program. When the computer program is executed by a processor, the capability indication method described in any of the above embodiments is implemented.

The embodiments of the present disclosure further provide a computer-readable storage medium for storing a computer program. When the computer program is executed by a processor, the capability determination method described in any of the above embodiments is implemented.

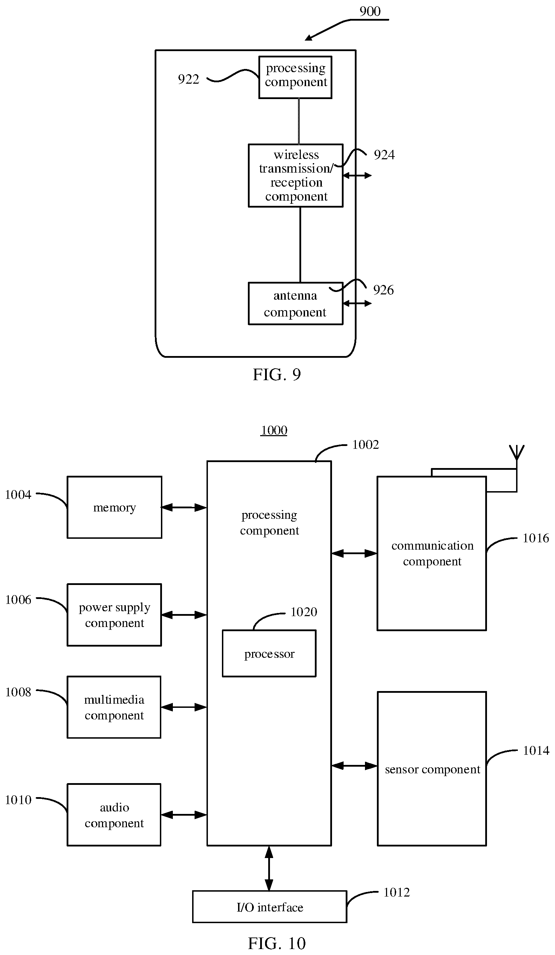

As shown in FIG. 9, FIG. 9 is a schematic block diagram of an apparatus 900 for capability determination according to an embodiment of the present disclosure. The apparatus 900 may be a base station. Referring to FIG. 9, the apparatus 900 includes a processing component 922, a wireless transmission/reception component 924, an antenna component 926, and a signal processing part specific to a wireless interface. The processing component 922 may further include one or more processors. One of the processors in the processing component 922 may be configured to implement the capability determination method described in any of the above embodiments.

Fig. 10 is a schematic block diagram of an apparatus 1000 for capability indication according to an embodiment of the present disclosure. For example, the apparatus 1000 may be a terminal, such as a mobile phone, a computer, a digital broadcast terminal, a messaging device, a game console, a tablet device, a medical device, a fitness device, a personal digital assistant, etc.

As shown in FIG. 10, the apparatus 1000 may include one or more of the following components: a processing component 1002, a memory 1004, a power supply component 1006, a multimedia component 1008, an audio component 1010, an input/output (I/O) interface 1012, a sensor component 1014, and a communication component 1016.

The processing component 1002 generally controls the overall operation of the apparatus 1000, such as operations associated with display, phone calls, data communications, camera operations, and recording operations. The processing component 1002 may include one or more processors 1020 to execute instructions to implement all or part of the steps of the capability indication method performed by the terminal as described in any of the above embodiments. In addition, the processing component 1002 may include one or more modules to facilitate the interaction between the processing component 1002 and other components. For example, the processing component 1002 may include a multimedia module to facilitate the interaction between the multimedia component 1008 and the processing component 1002.

The memory 1004 is configured to store various types of data to support operations on the apparatus 1000. Examples of such data include instructions for any application or method operating on the apparatus 1000, contact data, phonebook data, messages, pictures, videos, and the like.

The power supply component 1006 provides power to the various components of the apparatus 1000. The power supply component 1006 may include a power management system, one or more power supplies, and other components associated with generating, managing, and distributing power for the apparatus 1000.

The multimedia component 1008 includes a screen that provides an output interface between the apparatus 1000 and the user. In some embodiments, the screen may include a liquid crystal display (LCD) and a touch panel (TP). If the screen includes a touch panel, the screen may be implemented as a touch screen to receive input signals from the user.

The audio component 1010 is configured to output and/or input audio signals. For example, the audio component 1010 includes a microphone (MIC), and when the apparatus 1000 is in an operation mode, such as a call mode, a recording mode, and a speech recognition mode, the microphone is configured to receive an external audio signal. The received audio signal may be further stored in the memory 1004 or sent via the communication component 1016. In some embodiments, the audio component 1010 also includes a speaker for outputting audio signals.

The I/O interface 1012 provides an interface between the processing component 1002 and a peripheral interface module, such as a keyboard, a click wheel, a button, etc. The button may include, but is not limited to, a home button, a volume button, a start button, and a lock button.

The sensor assembly 1014 includes one or more sensors for providing status assessment of various aspects for the apparatus 1000.

The communication component 1016 is configured to facilitate wired or wireless communication between the apparatus 1000 and other devices. The apparatus 1000 may access a wireless network based on a communication standard, such as Wi-Fi, 2G, 3G, 4G LTE, 5G NR, or their combination. In an example embodiment, the communication component 1016 receives a broadcast signal or broadcast-related information from an external broadcast management system via a broadcast channel. In an example embodiment, the communication component 1016 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an example embodiment, the apparatus 1000 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to execute the capability indication method performed by the terminal as described in any of the above embodiments.

In an example embodiment, a non-transitory computer-readable storage medium including instructions is also provided, such as a memory 1004 including instructions, and the instructions may be executed by the processor 1020 of the apparatus 1000 to complete the capability indication method performed by the terminal as described in any of the above embodiments. For example, the non-transitory computer-readable storage medium may be a ROM, a random access memory (RAM), a CD-ROM, a magnetic tape, a floppy disk, an optical data storage device, etc.

Those skilled in the art will readily appreciate other embodiments of the present disclosure after considering the specification and practicing the disclosure disclosed herein. The present disclosure is intended to cover any variations, uses, or adaptations of the present disclosure that follow the general principles of the present disclosure and include common knowledge or customary techniques in the art that are not disclosed in the present disclosure. The description and examples are to be considered exemplary only, and the true scope and spirit of the present disclosure are indicated by the following claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. A capability indication method, performed by a terminal, comprising:
initiating random access to a network device, wherein a resource used for the random access is used to indicate whether the terminal has a full-duplex capability.

2. The method according to claim 1, wherein the resource comprises at least one of:
a code domain resource; or
a random access occasion.

3. The method according to claim 2, wherein the code domain resource comprises a preamble.

4. The method according to any one of claims 1 to 3, wherein initiating the random access to the network device comprises:
sending a preamble corresponding to a first index to the network device, wherein the preamble corresponding to the first index is used to indicate that the terminal has the full-duplex capability; or
sending a preamble corresponding to a second index to the network device, wherein the preamble corresponding to the second index is used to indicate that the terminal does not have the full-duplex capability.

5. The method according to claim 4, further comprising:
determining a range of the first index according to first indication information sent by the network device.

6. The method according to any one of claims 1 to 4, further comprising:
determining, according to second indication information sent by the network device, a preamble to be used by a terminal with full-duplex capability for performing the random access.

7. The method according to claim 1 or 2, wherein initiating the random access to the network device comprises:
initiating the random access to the network device at a first random access occasion, wherein the first random access occasion is used to indicate that the terminal has the full-duplex capability; or
initiating the random access to the network device at a second random access occasion, wherein the second random access occasion is used to indicate that the terminal does not have the full-duplex capability.

8. The method according to claim 7, wherein
the first random access occasion is a random access occasion determined according to a common random access channel configuration; and/or
the second random access occasion is a random access occasion determined according to a common random access channel configuration.

9. The method according to claim 7 or 8, further comprising:
determining, according to third indication information sent by the network device, a random access occasion to be used by a terminal with full-duplex capability for performing the random access, and/or a random access occasion to be used by a terminal without full-duplex capability for performing the random access.

10. The method according to claim 7, wherein
the second random access occasion is a random access occasion determined according to a common random access channel configuration; and/or
the first random access occasion is a random access occasion determined according to the second random access occasion and a frequency domain offset.

11. The method according to claim 10, wherein the frequency domain offset is determined based on indication information sent by the network device, and/or the frequency domain offset is determined based on a protocol agreement.

12. The method according to claim 7, wherein the first random access occasion is a random access occasion determined according to a first random access channel configuration; and/or
the second random access occasion is a random access occasion determined according to a second random access channel configuration.

13. The method according to claim 12, wherein the first random access channel configuration is a full-duplex terminal-specific random access channel configuration; and/or the second random access channel configuration is a common random access channel configuration.

14. The method according to claim 12, wherein in a case that the first random access occasion does not overlap with the second random access occasion, the first random access occasion is used to indicate that the terminal has the full-duplex capability; and/or
in a case that the first random access occasion overlaps with the second random access occasion, the first random access occasion is used to indicate that the terminal does not have the full-duplex capability.

15. A capability determination method, performed by a network device, comprising:
performing random access with a terminal; and
determining whether the terminal has a full-duplex capability according to a resource used by the terminal for random access.

16. The method according to claim 15, wherein the resource comprises at least one of:
a code domain resource; or
a random access occasion.

17. The method according to claim 16, wherein the code domain resource comprises a preamble.

18. The method according to any one of claims 15 to 17, wherein determining whether the terminal has the full-duplex capability according to the resource used by the terminal for random access comprises:
determining that the terminal has the full-duplex capability in response to determining that the terminal sends a preamble corresponding to a first index; or
determining that the terminal does not have the full-duplex capability in response to determining that the terminal sends a preamble corresponding to a second index.

19. The method according to claim 18, further comprising:
sending first indication information to the terminal, wherein the first indication information is used to indicate a range of the first index.

20. The method according to claim 18, further comprising:
sending second indication information to the terminal, wherein the second indication information is used to indicate a preamble to be used by a terminal with full-duplex capability for performing the random access.

21. The method according to claim 15 or 16, wherein determining whether the terminal has the full-duplex capability according to the resource used by the terminal for random access comprises:
determining that the terminal has the full-duplex capability, in response to determining that the terminal initiates the random access at a first random access occasion; or
determining that the terminal does not have the full-duplex capability, in response to determining that the terminal initiates random access at a second random access occasion.

22. The method according to claim 21, wherein the first random access occasion is a random access occasion determined according to a common random access channel configuration; and/or the second random access occasion is a random access occasion determined according to a common random access channel configuration.

23. The method according to claim 21 or 22, further comprising:
sending third indication information to the terminal, wherein the third indication information is used to indicate a random access occasion to be used by a terminal with full-duplex capability for performing the random access, and/or a random access occasion to be used by a terminal without full-duplex capability for performing the random access.

24. The method according to claim 21, wherein the second random access occasion is a random access occasion determined according to a common random access channel configuration, and the first random access occasion is a random access occasion determined according to the second random access occasion and a frequency domain offset.

25. The method according to claim 24, further comprising:
determining the frequency domain offset, and indicating the frequency domain offset to the terminal through indication information; and/or determining the frequency domain offset based on a protocol agreement.

26. The method according to claim 21, wherein the first random access occasion is a random access occasion determined according to a first random access channel configuration, and the second random access occasion is a random access occasion determined according to a second random access channel configuration.

27. The method according to claim 26, wherein the first random access channel configuration is a full-duplex terminal-specific random access channel configuration; and/or the second random access channel configuration is a common random access channel configuration.

28. The method according to claim 26, wherein determining whether the terminal has the full-duplex capability according to the resource used by the terminal for random access further comprises:
in a case that the first random access occasion does not overlap with the second random access occasion, determining that the terminal has the full-duplex capability; and/or
in a case that the first random access occasion overlaps with the second random access occasion, determining that the terminal does not have the full-duplex capability.

29. A capability indication apparatus, comprising:
a sending module, configured to initiate random access to a network device, wherein a resource used for the random access is used to indicate whether the terminal has the full-duplex capability.

30. A capability determination apparatus, comprising:
a communication module, configured to perform random access with a terminal; and
a processing module, configured to determine whether the terminal has the full-duplex capability according to a resource used by the terminal for random access.

31. A capability indication system, comprising a terminal and a network device, wherein the terminal is configured to implement the capability indication method according to any one of claims 1 to 11, and the network device is configured to implement the capability determination method according to any one of claims 12 to 22.

32. A communication apparatus, comprising:
a processor; and
a memory for storing a computer program;
wherein when the computer program is executed by the processor, the capability indication method according to any one of claims 1 to 14 is implemented.

33. A communication apparatus, comprising:
a processor; and
a memory for storing a computer program;
wherein when the computer program is executed by the processor, the capability determination method according to any one of claims 15 to 28 is implemented.

34. A computer-readable storage medium for storing a computer program, wherein when the computer program is executed by a processor, the capability indication method according to any one of claims 1 to 14 is implemented.

35. A computer-readable storage medium for storing a computer program, wherein when the computer program is executed by a processor, the capability determination method according to any one of claims 15 to 28 is implemented.
